# EUROPÄISCHE PATENTSCHRIFT

(11) **EP 1 892 132 B1**
(45) Veröffentlichungstag und Bekanntmachung des Hinweises auf die Patenterteilung: **16.05.2012**
(21) Anmeldenummer: 07016484.3
(22) Anmeldetag: 22.08.2007
(51) Int. Cl.: B60H 1/00, F16K 11/00, F16K 11/065, F16K 11/20

(54) **Mehrwegeventil, insbesondere für ein Fahrzeug-Heiz/Kühl-System**
Manifold valve, in particular for the heating/cooling system in a vehicle
Soupape à plusieurs voies, en particulier pour un système de chauffage/refroidissement d'un véhicule

(30) Priorität: 23.08.2006 DE 102006039480
(43) Veröffentlichungstag der Anmeldung: 27.02.2008
(73) Patentinhaber: J. Eberspächer GmbH & Co. KG, 73730 Esslingen (DE)
(72) Erfinder: Humburg, Michael, 73035 Göppingen (DE)
(74) Vertreter: Ruttensperger, Bernhard

(56) Entgegenhaltungen:
- EP-A1- 0 454 629
- EP-A1- 1 236 938
- DE-A1- 4 420 162
- DE-A1- 10 323 900
- US-A- 5 928 523

## Beschreibung

Die vorliegende Erfindung betrifft ein Mehrwegeventil, welches beispielsweise in einem Fahrzeug-Heiz/Kühl-System eingesetzt werden kann, um verschiedene Strömungswege freizugeben bzw. zu unterbrechen, gemäß dem Oberbegriff des Anspruchs 1.

Derartige beispielsweise als 4/4-Wege-Ventile aufgebaute Sitzventile umfassen jeweils in Zuordnung zu paarweise einander gegenüber liegenden Ventilöffnungen einen mit zwei Ventiltellem ausgebildeten Stößel, der in seiner Längsrichtung hin und her verschoben werden kann, so dass jeweils einer der Ventilteller auf einer eine jeweilige Ventilöffnung umgebenden Ventilsitzfläche aufsitzt, während der andere Teller von der ihm zugeordneten Ventilsitzfläche abgehoben ist und mithin die entsprechende Ventilöffnung freigibt. Durch die beiden nebeneinander liegenden Ventilschieber mit den jeweils daran vorzusehenden Ventiltellern wird ein relativ großvolumiger Aufbau erzwungen, wobei derartige Sitzventile weiterhin den Nachteil eines vergleichsweise großen Druckverlustes haben, da auch dann, wenn eine jeweilige Ventilöffnung nicht durch einen auf einer Ventilsitzfläche aufsitzenden Ventilteller verschlossen ist, das heranströmende Fluid einen jeweiligen von einer Ventilsitzfläche abgehobenen Ventilteller durch einen zwischen diesem und der Ventilsitzfläche gebildeten Ringraum hindurch umströmen muss. Es hat sich gezeigt, dass in Heiz/Kühl-Systemen von Fahrzeugen in derartigen 4/4-Wege-Ventilen Druckverluste von 180 mbar bis 270 mbar auftreten können.

Ein Mehrwegeventil gemäß dem Oberbegriff des Anspruchs 1 ist aus der DE 44 20 162 A1 bekannt. Dieses bei einem Kühlsystem eines Fahrzeug einsetzbare Mehrwegeventil umfasst in einem Ventilkörper eine Ventilkammer, in welcher ein Ventilschieber hin und her bewegbar ist. Zu der Ventilkammer führen jeweils einander paarweise zugeordnete Ventilöffnungen, wobei jeweils zwei Ventilöffnungen eine Gruppe von Ventilöffnungen bilden. In dem Ventilschieber ist zumindest eine Ventilschieberöffnung gebildet, die durch Verschieben des Ventilschiebers so positionierbar ist, dass sie eine der Öffnungen einer Gruppe von Ventilöffnungen freigibt, während die andere Ventilöffnung dieser Gruppe abgeschlossen ist Auf diese Art und Weise wird es möglich, verschiedene Strömungsverbindungen über das Ventil hinweg herzustellen.

Die EP 0 454 629 A1 offenbart eine Ventilanordnung für eine Kalt/WarmWasser-Mischbatterie. Diese Ventilanordnung umfasst für den Kaltwasserstrom einerseits und den Warmwasserstrom andererseits jeweils voneinander unabhängig bewegbare Ventilschieber, welche, je nach deren Verschiebestellung, eine Verbindung zwischen einer Warmwassereintrittsöffnung und einer Warmwasseraustrittsöffnung bzw. einer Kaltwassereintrittsöffnung und einer Kaltwasseraustrittsöffnung freigeben oder unterbrechen. Eine Durchmischung der beiden.Wasserströme entsteht erst dort, wo nach dem Austritt aus den jeweiligen Austrittsöffnungen die Wasserströme in einen gemeinsamen Leitungsbereich gelangen.

Die EP 1 236 938 A1 offenbart ein Mehrwegeventil mit zwei Ventilschiebern und zwei Gruppen von Ventilöffnungen, mit welchen die beiden Ventilschieber jeweils zusammenwirken. Eine der beiden Gruppen umfasst eine einzige Ventilöffnung, während die andere der beiden Gruppen drei Ventilöffnungen umfasst. Je nachdem, in welcher Verschiebestellung die beiden Ventitschieber sind, werden verschiedene Strömungswege hergestellt bzw. unterbrochen.

Die DE 103 23 900 A1 offenbart ein Mehrwegeventil für ein Fahrzeug-Kühl/Heiz-System, bei welchem einander jeweils paarweise zugeordnete und somit eine Gruppe bildende Ventilöffnungen in eine Ventilkammer münden. In der Ventilkammer ist ein durch Rotation bewegbarer Ventilschieber angeordnet. In dem Ventilschieber vorgesehene Öffnungen können in bzw. außer Ausrichtung mit den verschiedenen Ventilöffnungen gebracht werden, um somit verschiedene Strömungswege freizugeben bzw. zu unterbrechen.

Die US 5,928.523 A offenbart eine Vorrichtung zum kontinuierlichen Filtern einer Polymerschmelze. Diese Vorrichtung umfasst zwei Mehrwegeventile ein Stromaufwärtiges dieser Ventile umfasst einen Einlass und drei Auslassströmungswege, während ein Stromabwärtiges der Mehrwegeventile drei Einlassströmungswege und einen Auslassströmungsweg aufweist. Durch die miteinander zwangsverkoppelte Bewegung von Ventilschiebern dieser beiden Mehrwegeventile werden jeweils zwei von drei parallel zueinander eingerichteten Strömungswegen freigegeben, während einer der Strömungswege unterbrochen ist.

Es ist die Aufgabe der vorliegenden Erfindung, ein Mehrwegeventil, insbesondere für ein Fahrzeug-Heiz/Kühl-System vorzusehen, das bei kompaktem Aufbau geringe Druckverluste und eine höhere Variabilität bei den herstellbaren Strömungswegen aufweist.

Erfindungsgemäß wird diese Aufgabe gelöst durch ein Mehrwegeventil, insbesondere für ein Fahrzeug-Heiz/Kühl-System, umfassend in einem Ventilkörper eine Ventilkammer und wenigstens zwei Gruppen von Ventilöffnungen mit jeweils einer Mehrzahl von Ventilöffnungen zu der Ventilkammer, wobei jeder Gruppe von Ventilöffnungen ein in einer Verschieberichtung verschiebbarer Ventilschieber zugeordnet ist zum Absperren und Freigeben ihrer Ventilöffnungen, wobei jeder Ventilschieber wenigstens eine Durchtrittsöffnung aufweist, die durch Verschieben des Ventilschiebers in der Verschieberichtung bezüglich wenigstens einer Ventilöffnung der zugeordneten Gruppen von Ventilöffnungen in eine Durchtrittsstellung bringbar ist, in welcher eine Durchtrittsverbindung zwischen dieser Ventilöffnung und der Ventilkammer hergestellt ist, und in eine Absperrstellung bringbar ist, in welcher keine Durchtrittsverbindung zwischen dieser Ventilöffnung und der Ventilkammer hergestellt ist.

Von elementarem Vorteil ist bei dem erfindungsgemäßen Mehrwegeventil, dass dann, wenn eine Ventilöffnung freigegeben werden soll, also nicht gegen Durchströmung abgesperrt sein soll, dieser Ventilöffnung eine Durchtrittsöffnung im Ventilschieber gegenüber liegt, mithin also im Wesentlichen keine Strömungswiderstände durch den Ventilschieber an sich generiert werden. Die somit insbesondere durch den speziellen Aufbau der Ventilschieber generierten Druckverluste können auf einen Bereich von 20 mbar bis 30 mbar begrenzt werden. Weiterhin führt der efindungsgemäße Aufbau mit Durchtrittsöffnungen in den Ventilschiebern zu einer wesentlich kompakteren Ausgestaltung.

Beispielsweise kann zum Bereitstellen klarer Strömungsverhältnisse vorgesehen sein, dass dann, wenn ein Ventilschieber mit einer Durchtrittsöffnung bezüglich einer Ventilöffnung der ihm zugeordneten Gruppe von Ventilöffnungen in der Durchtrittsstellung ist, alle anderen Ventilöffnungen dieser Gruppe von Ventilöffnungen durch diesen Ventilschieber abgesperrt sind. Eine weitere Merkmalsgruppe, die neben dem Vorteil eines kompakten Aufbaus auch hinsichtlich der Reduzierung von Strömungswiderständen vorteilhaft ist, sieht vor, dass jeder Ventilschieber eine der Anzahl an Ventilöffnungen der ihm zugeordneten Gruppe von Ventilöffnungen entsprechende Anzahl an Durchtrittsöffnungen aufweist.

Auf diese Art und Weise wird es weiterhin möglich, den zum Umschalten verschiedener Strömungswege durch einen Ventilschieber erforderlichen Verschiebeweg möglichst gering zu halten.

Ein sehr kompakter Aufbau kann weiterhin dadurch unterstützt werden, dass bei wenigstens einer Gruppe von Ventilöffnungen die Ventilöffnungen in der Verschieberichtung des zugeordneten Ventilschiebers nebeneinander liegend aufeinander folgen. Dabei ist es dann weiterhin vorteilhaft, wenn die in einem Ventilschieber vorgesehenen Durchtrittsöffnungen in der Verschieberichtung dieses Ventilschiebers aufeinander folgen.

Weiterhin kann vorgesehen sein, dass der gegenseitige Abstand der Durchtrittsöffnungen in einem Ventilschieber sich von dem gegenseitigen Abstand der Ventilöffnungen der diesem Ventilschieber zugeordneten Gruppe von Ventilöffnungen unterscheidet.

Beispielsweise bei Aufbau des erfindungsgemäßen Mehrwegeventils als 4/4-Wege-Ventil kann vorgesehen sein, dass zwei Gruppen von Ventilöffnungen in dem Ventilkörper einander gegenüber liegend vorgesehen sind. Dabei kann der Strömungswiderstand dadurch weiter reduziert bzw. gering gehalten werden, dass jedem Ventilschieber ein Ventilschieberantrieb zugeordnet ist zur Verschiebung in seiner Verschieberichtung unabhängig von der Verschiebung anderer Ventilschieber.

Die den beiden Gruppen von Ventilöffnungen zugeordneten Ventilschieber können nebeneinander liegen und in der gleichen Verschieberichtung verschiebbar sein. Auch dies trägt zu einem kompakten Aufbau bei.

Ferner kann zur Bereitstellung einer größtmöglichen Kombinationsvielfalt der Strömungswege vorgesehen sein, dass jedem Ventilschieber ein Ventilschieberantrieb zugeordnet ist zur Verschiebung in seiner Verschieberichtung unabhängig von der Verschiebung anderer Ventilschieber.

Die Erfindung betrifft ferner ein Fahrzeug-Heiz/Kühl-System mit einem erfindungsgemäßen Mehrwegeventil, wobei die Ventilöffnungen einer ersten Gruppe von Ventilöffnungen mit einer ersten Verbindungsleitung und einer zweiten Verbindungsleitung in Verbindung stehen, welche an einen Kühlmittelmantel eines Antriebsaggregats angeschlossen sind, und wobei die Ventilöffnungen einer zweiten Gruppe von Ventilöffnungen mit einer dritten Verbindungsleitung und einer vierten Verbindungsleitung in Verbindung stehen, welche an einen Heizungswärmetauscher angeschlossen sind, wobei ferner eine fünfte Verbindungsleitung von der ersten Verbindungsleitung oder der zweiten Verbindungsleitung abzweigt und eine sechste Verbindungsleitung von der dritten Verbindungsleitung oder der vierten Verbindungsleitung abzweigt, wobei die fünfte Verbindungsleitung und die sechste Verbindungsleitung an ein vorzugsweise brennstoffbetriebenes Fahrzeugheizgerät angeschlossen sind.

Die vorliegende Erfindung wird nachfolgend mit Bezug auf die beiliegenden Figuren detailliert beschrieben. Es zeigt:
- Fig. 1: eine Schnittansicht eines erfindungsgemäßen Mehrwegeventils;
- Fig. 2: das in Fig. 1 dargestellte Mehrwegeventil, geschnitten längs einer Linie II - II in Fig. 1;
- Fig. 3: eine der Fig. 2 entsprechende Ansicht einer alternativen Ausgestaltungsform;
- Fig. 4: einen bei dem in Fig. 1 gezeigten Mehrwegeventil eingesetzten Ventilschieber im Längsschnitt;

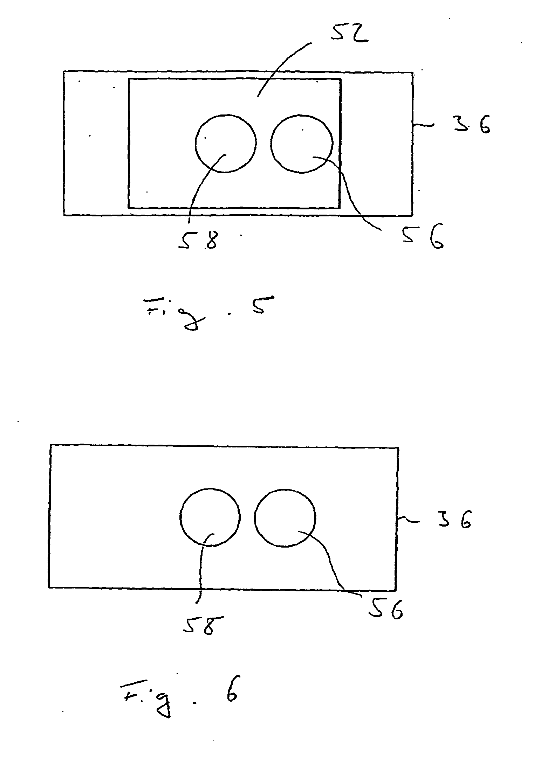

- Fig. 5: den in Fig. 4 dargestellten Ventilschieber, betrachtet in Blickrichtung V in Fig. 4;
- Fig. 6: den in Fig. 4 dargestellten Ventilschieber, betrachtet in Blickrichtung VI in Fig. 4;
- Fig. 7: eine Prinzipdarstellung eines Fahrzeug-Heiz/Kühl-Systems mit einem 4/4-Wege-Ventil;
- Fig. 8: eine der Fig. 1 entsprechende Schnittdarstellung des bei dem System der Fig. 4 eingesetzten Mehrwegeventils in einer ersten Schaltstellung;
- Fig. 9: das in Fig. 7 erkennbare Mehrwegeventil in einer zweiten Schaltstellung;
- Fig. 10: das in Fig. 7 erkennbare Mehrwegeventil in einer dritten Schaltstellung;
- Fig. 11: das in Fig. 7 erkennbare Mehrwegeventil in einer vierten Schaltstellung.

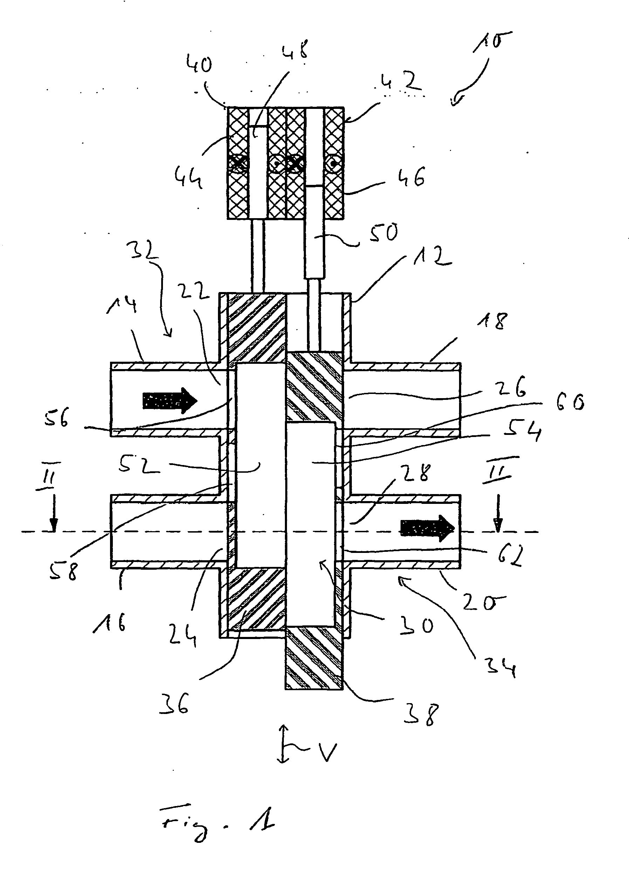

In Fig. 1 ist ein als 4/4-Wege-Ventil aufgebautes erfindungsgemäßes Mehrwegeventil allgemein mit 10 bezeichnet. Dieses Mehrwegeventil 10 umfasst einen in dieser Ausgestaltungsform mit quadratischem Querschnitt im Wesentlichen zylindrisch ausgestalteten Ventilkörper 12. An diesem Ventilkörper 12 sind vier Verbindungsansätze 14, 16, 18, 20 vorgesehen, wobei jeder Verbindungsansatz 14, 16, 18, 20 über eine Ventilöffnung 22, 24, 26, 28 zu einer im Inneren des Ventilkörpers 12 gebildeten Ventilkammer 30 offen ist. Von diesen Ventilöffnungen 22, 24, 26, 28 bilden die Ventilöffnungen 22, 24 eine erste Gruppe 32 von Ventilöffnungen, während die beiden Ventilöffnungen 26, 28 eine zweite Gruppe 34 von Ventilöffnungen bilden. Diese beiden Gruppen 32, 34 von Ventilöffnungen sind am Ventilkörper 12 so angeordnet, dass sie sich im Wesentlichen gegenüberliegen. Insbesondere erkennt man, dass jede der Ventilöffnungen 22, 24, der Gruppe 32 von Ventilöffnungen eine Ventilöffnung 26 bzw. 28 der Gruppe 34 von Ventilöffnungen im Wesentlichen direkt gegenüberliegt.

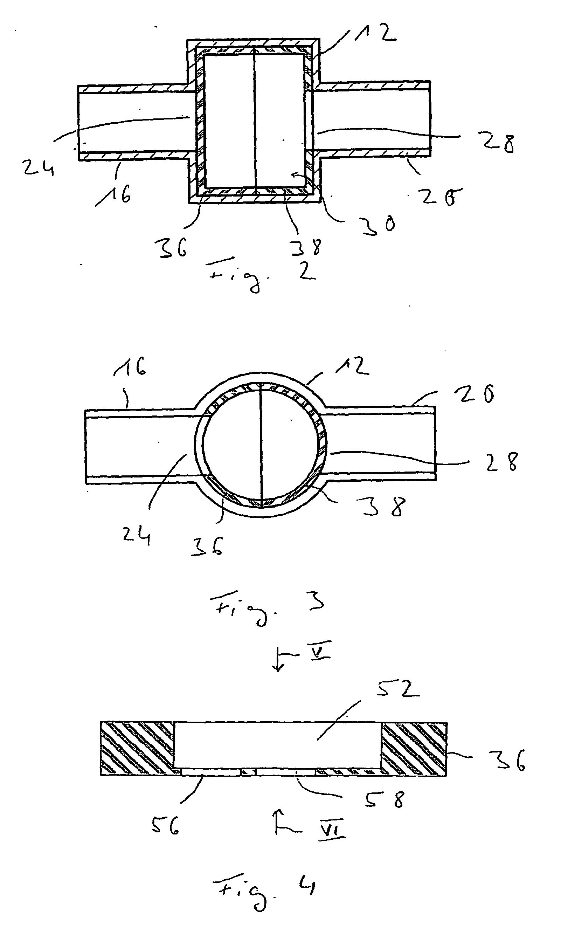

Im Ventilkörper 12 sind zwei nebeneinander liegende Ventilschieber 36, 38 angeordnet. Diese Ventilschieber 36, 38 sind so dimensioniert und positioniert, dass sie, wie in Fig. 2 erkennbar, den im Ventilkörper 12 gebildeten Innenraum vollständig ausfüllen und somit auch einen im Wesentlichen dichten Abschluss im Übergang zur Innenoberfläche des Ventilkörpers 12 bereitstellen. Bei der in Fig. 2 erkennbaren Ausgestaltungsform weisen also die Ventilschieber 36, 38 jeweils einen rechteckigen Querschnitt auf, so dass sie im Verbund dem Querschnitt des Innenraums des Ventilkörpers 12 entsprechen.

Es sei darauf hingewiesen, dass es selbstverständlich möglich ist, hier andere Querschnitte sowohl des Ventilkörpers 12 als auch der Ventilschieber 36, 38 vorzusehen. Die Fig. 3 zeigt eine Ausgestaltungsform, bei welcher der Ventilkörper 12 mit im Wesentlichen kreisrund-zylindrischer Querschnittsgeometrie ausgestaltet ist, so dass die beiden Ventilschieber 36, 38 hier ebenfalls mit entsprechend abgerundeter Umfangskontur ausgestaltet sind.

Jedem Ventilschieber 36, 38 ist ein eigenständig arbeitender Ventilschieberantrieb 40, 42 zugeordnet. Jeder dieser Ventilschieberantriebe 40, 42 kann eine Spule 44 bzw. 46 und einen darin bewegbaren Anker 48, 50 umfassen, so dass durch Erregung der Spule 44, 46 der Anker 48 bzw. 50 in den Innenvolumenbereich der Spule 44, 46 hineingezogen wird oder daraus hinausbewegt wird. Durch diese elektromagnetisch wirkenden Ventilschieberantriebe ist jeder Ventilschieber 36, 38 in einer Verschieberichtung V verschiebbar. Wie man auch in Fig. 4 erkennt, weist jeder Ventilschieber 36, 38 eine zu einer Seite desselben offene Aussparung 52, 54 auf. Die Ventilschieber 36, 38 sind so positioniert, dass sie mit ihren offenen Aussparungen 52, 54 sich gegenüberliegen, so dass unabhängig von der jeweiligen Verschiebestellung der beiden Ventilschieber 36, 38 die durch die beiden Aussparungen 52, 54 gebildeten Volumina ständig in Verbindung sind.

Ferner weist jeder Ventilschieber 52, 54 zwei Durchtrittsöffnungen 56, 58 bzw. 60, 62 auf. Jede dieser Durchtrittsöffnungen 56, 58, 60, 62 ist einer Ventilöffnung 22, 24, 26, 28 zugeordnet. Man erkennt, dass die im Ventilschieber 32, 34 vorgesehene Durchtrittsöffnung 56 der Ventilöffnung 22 zugeordnet ist und die ebenfalls im Ventilschieber 36 vorgesehene Durchtrittsöffnung 58 der Ventilöffnung 24 zugeordnet ist. Dies bedeutet letztendlich, dass dieser Ventilschieber 36 mit seinen Durchtrittsöffnungen 56, 58 der Gruppe 32 von Ventilöffnungen zugeordnet ist. Entsprechend ist die Durchtrittsöffnung 60 des Ventilschiebers 38 der Ventilöffnung 26 zugeordnet und die Durchtrittsöffnung 62 dieses Ventilschiebers 38 ist der Ventilöffnung 28 zugeordnet. Somit ist also der Ventilschieber 38 der Gruppe 34 von Ventilöffnungen zugeordnet. Man erkennt, dass bei jeder dieser Gruppen 32, 34 von Ventilöffnungen die jeweiligen Ventilöffnungen 22, 24 bzw. 26, 28 in der Verschieberichtung V des jeweils zugeordneten Ventilschiebers 36, 38 aufeinander folgen und nebeneinander liegen. Entsprechendes gilt auch für die in dem jeweiligen Ventilschieber 36 bzw. 38 vorgesehenen Durchtrittsöffnungen 56, 58 bzw. 60, 62. Weiterhin erkennt man, dass der gegenseitige Abstand der Ventilöffnungen 22, 24, 26, 28 in den beiden Gruppen 32, 34 von Ventilöffnungen sich von dem gegenseitigen Abstand der in dem jeweils zugeordneten Ventilschieber 36 bzw. 38 vorgesehenen Durchtrittsöffnungen 56, 58 bzw. 60, 62 unterscheidet. Somit ist eine Situation geschaffen, bei welcher immer dann, wenn eine der Durchtrittsöffnungen 56, 58, 60, 62 vollständig mit der zugeordneten Ventilöffnung 22, 24, 26, 28 ausgerichtet ist und somit bezüglich dieser in einer Freigabestellung ist, die jeweils andere der Durchtrittsöffnungen, im dargestellten Beispiel die Durchtrittsöffnung 58 des Ventilschiebers 36 und die Durchtrittsöffnung 60 des Ventilschiebers 38, vollständig außer Ausrichtung bzw. Überlapp mit der jeweils zugeordneten Ventilöffnung 24, 26 ist und mithin der jeweilige Ventilschieber 36, 38 diese Ventilöffnung 24, 26 absperrt. In der in Fig. 1 erkennbaren Schaltstellung ist also eine Strömungsverbindung zwischen den Verbindungsansätzen 14 und 20 geschaffen. Da in jeder der nachfolgend noch beschriebenen möglichen Schaltstellungen des Mehrwegeventils 10 jeweils eine Durchtrittsöffnung 56, 58, 60, 62 bei jedem Ventilschieber 36, 38 vollständig bezüglich einer zugeordneten der Ventilöffnungen 22, 24, 26, 28 ausgerichtet ist, wobei vorzugsweise hier die einander zugeordneten Öffnungen gleiche Abmessungen aufweisen, und da keine weiteren die Strömung im Bereich dieser Durchtrittsöffnungen behindernden Organe vorhanden sind, ist der Durchströmungswiderstand eines erfindungsgemäß aufgebauten Mehrwegeventils 10 sehr gering.

Das Umschalten zwischen einzelnen Schaltstellungen kann einfach durch Erregung der jeweiligen Ventilschieberantriebe 40, 42 und somit Verschieben der Ventilschieber 36 bzw. 38 in der Verschieberichtung V erfolgen. Wird beispielsweise der Ventilschieber 36 nach unten verschoben, so dass die Durchtrittsöffnung 56 außer Ausrichtung mit der Ventilöffnung 22 gebracht wird, bewegt sich die Durchtrittsöffnung 58 in Überlapp mit der zugeordneten Ventilöffnung 24 und gibt diese somit frei. Bei dann nicht verschobenem Ventilschieber 38 wäre eine Durchströmungsverbindung zwischen den einander unmittelbar gegenüberliegenden Verbindungsansätzen 16 und 20 mit im Wesentlichen geradlinigem, unbehindertem Strömungsweg geschaffen.

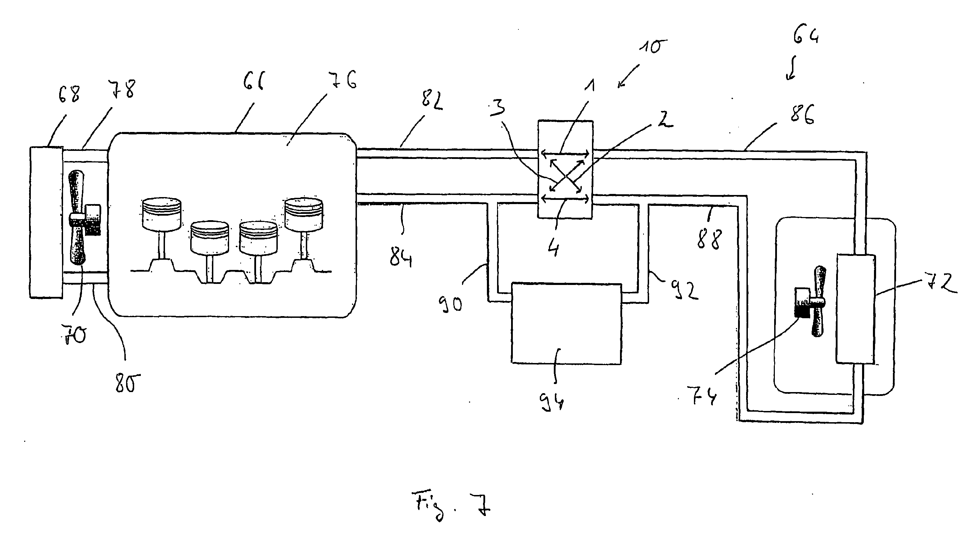

In Fig. 7 ist ein Fahrzeug-Heiz/Kühl-System 64 gezeigt, in welches ein derartiges erfindungsgemäß aufgebautes Mehrwegeventil, hier wieder ausgestaltet als 4/4-Wege-Ventil, eingegliedert werden kann. Dieses System 64 umfasst neben dem Mehrwegeventil 10 eine Brennkraftmaschine 66, einen dieser zugeordneten Kühlerwärmetauscher 68 mit Gebläse 70 sowie einen Heizungswärmetauscher 72 mit zugeordnetem Gebläse 74. Zwischen einem Kühlmittelmantel 76 der Brennkraftmaschine 66 und dem Kühlerwärmetauscher 68 erstrecken sich zwei Verbindungsleitungen 78, 80, so dass von diesem Kühlmittelmantel 76 Kühlmittel beispielsweise über die Verbindungsleitung 78 zum Kühlerwärmetauscher 68 strömen kann und über die Verbindungsleitung 80 wieder zurückströmen kann.

Zwischen dem Mehrwegeventil 10, beispielsweise den in Fig. 1 erkennbaren. Verbindungsansätzen 14 und 16, und dem Kühlmittelmantel 76 der Brennkraftmaschine 66 erstrecken sich ebenfalls zwei Verbindungsleitungen 82, 84. Zwischen dem Mehrwegeventil 10, beispielsweise den Verbindungsansätzen 18, 20 in Fig. 1, und dem Heizungswärmetauscher 72 erstrecken sich zwei Verbindungsleitungen 86, 88. Ferner zweigen von den Verbindungsleitungen 84 und 88 Verbindungsleitungen 90, 92 ab, welche eine Verbindung mit einem brennstoffbetriebenen Fahrzeugheizgerät 94 bzw. dessen Wärmetauscherbereich herstellen.

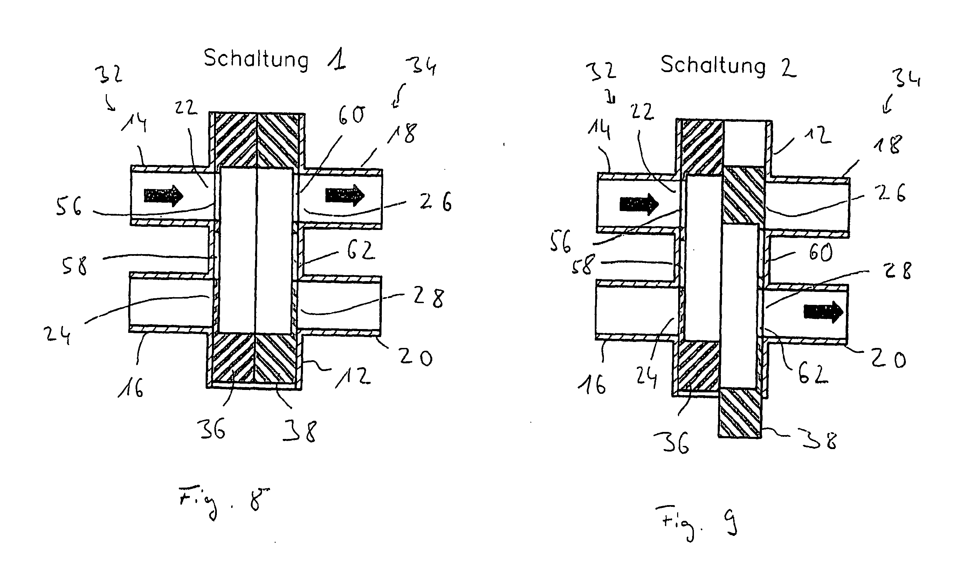

In dem Mehrwegeventil 10 in Fig. 7 sind mit Pfeilen 1, 2, 3 und 4 die vier möglichen Schaltzustände dieses als 4/4-Wege-Ventil ausgestalteten Mehrwegeventils dargestellt, die nachfolgend mit Bezug auf die Figuren 8 bis 11 auch erläutert werden. In der Schaltstellung 1, welche in Fig. 8 auch verdeutlicht ist, sind die beiden Ventilschieber 36, 38 so positioniert, dass eine Strömungsverbindung zwischen den Verbindungsansätzen 14 und 18 und somit den Verbindungsleitungen 82, 86 besteht. Die beiden Verbindungsansätze 16, 20 sind gegen Durchströmung abgesperrt. Dies bedeutet, dass die beiden Ventilöffnungen 22, 26 der Gruppen 32 und 34 von Ventilöffnungen in Ausrichtung mit den jeweils zugeordneten Durchtrittsöffnungen 56, 60 und somit durch diese freigegeben sind, während die beiden anderen Ventilöffnungen 24 und 28 der Gruppen 32 und 34 von Ventilöffnungen durch die zugeordneten Ventilschieber 36, 38 abgesperrt sind.

In der Schaltstellung 2 der Fig. 9 ist der Ventilschieber 38 bezüglich der Positionierung der Schaltstellung 1 nach unten verschoben worden, während der Ventilschieber 36 in seiner auch in der Schaltstellung 1 vorhandenen Positionierung belassen ist. Dies bedeutet, dass weiterhin die Ventilöffnung 22 der Gruppe 32 von Ventilöffnungen mit der zugehörigen Durchtrittsöffnung 56 ausgerichtet und somit durch diese freigegeben ist, während die Ventilöffnung 24 dieser Gruppe 32 von Ventilöffnungen weiterhin abgesperrt ist. Bei der Gruppe 34 ist nunmehr die Ventilöffnung 28 in Ausrichtung mit der zugeordneten Durchtrittsöffnung 62, während die Ventilöffnung 26 abgesperrt ist. Es besteht dann eine Strömungsverbindung zwischen den Verbindungsansätzen 14 und 20 und mithin den Verbindungsleitungen 82 und 88.

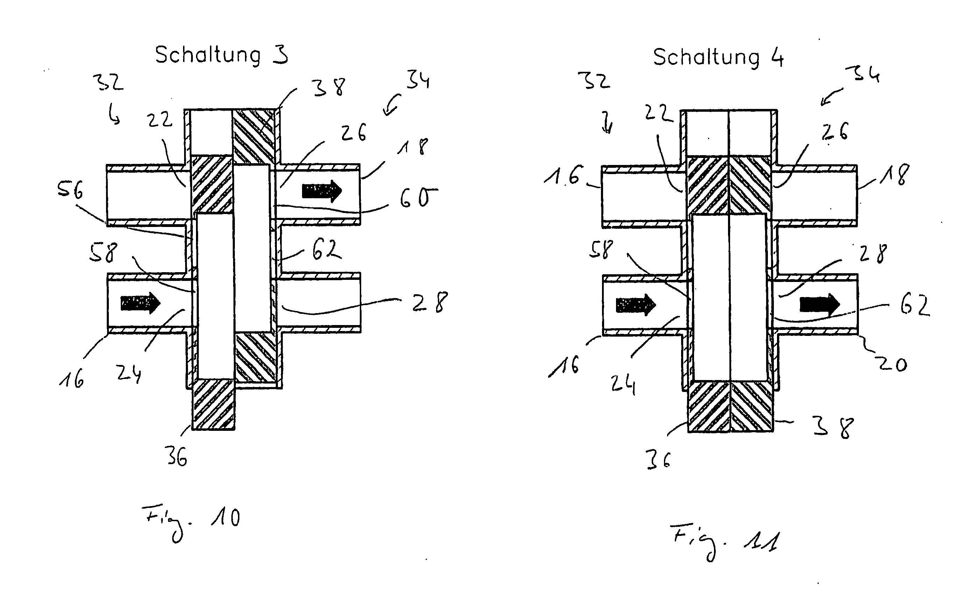

In der dritten Schaltstellung der Fig. 10 ist der Ventilschieber 36 bezüglich seiner Positionierung in der ersten Schaltstellung nach unten verschoben worden, während der Ventilschieber 38 in seiner auch in der Darstellung 1 vorhandenen Positionierung belassen wurde. Es ist nunmehr die Ventilöffnung 22 der Gruppe 32 von Ventilöffnungen durch den Ventilschieber 36 abgesperrt, während die Ventilöffnung 24 in Ausrichtung mit der zugeordneten Durchtrittsöffnung 58 ist und somit freigegeben ist. Bei der anderen Gruppe 34 von Ventilöffnungen ist die Ventilöffnung 26 in Ausrichtung mit der zugeordneten Durchtrittsöffnung 60 und somit zur Durchströmung freigeben, während die Ventilöffnung 28 abgesperrt ist. Hier besteht also eine Strömungsverbindung zwischen den Verbindungsansätzen 16 und 18 und somit den Verbindungsleitungen 84 und 86.

Bei der in Fig. 11 erkennbaren vierten Schaltstellung sind beide Ventilschieber 36 und 38 bezüglich ihrer Positionierung in der ersten Schaltstellung der Fig. 8 nach unten verschoben. Es sind nunmehr die beiden Ventilöffnungen 22 und 26 der Gruppen 32 und 34 von Ventilöffnungen abgesperrt, während die Ventilöffnung 24 und 28 in Ausrichtung mit den zugeordneten Durchtrittsöffnungen 58 und 62 und somit zur Durchströmung freigegeben sind. Es besteht hier eine Strömungsverbindung zwischen den Verbindungsansätzen 16 und 20 und somit zwischen den Verbindungsleitungen 84 und 88.

Durch die vorliegende Erfindung ist ein Mehrwegeventil vorgesehen, das bei sehr kompakter Bauweise und einfacher Betätigbarkeit nur einen geringen Strömungswiderstand bereitstellt. Obgleich dieses Mehrwegeventil 10 in den Figuren als 4/4-Wege-Ventil dargestellt ist, ist es selbstverständlich möglich, bei derartiger Ausgestaltung eine andere Anzahl an möglichen Verbindungen herzustellen, wenn entsprechend eine andere Anzahl an Ventilöffnungen in Zuordnung zu den verschiedenen Ventilschiebern vorgesehen ist. Weiterhin ist es selbstverständlich möglich, dieses erfindungsgemäße Mehrwegeventil in verschiedener Weise zu variieren. So könnte beispielsweise in Zuordnung zu den jeweiligen Gruppen von Ventilöffnungen ein jeweiliger Ventilschieber nur eine einzige Durchtrittsöffnung aufweisen, so dass dieser Ventilschieber dann so weit zu verschieben ist, dass diese einzige Durchtrittsöffnung mit der gewünschten Ventilöffnung ausgerichtet ist. Dies bedingt größere Verschiebewege und mithin längere Stellzeiten, bringt jedoch den Vorteil mit sich, dass in einfacher Art und Weise dafür gesorgt werden kann, dass nicht gleichzeitig beide oder mehrere Ventilöffnungen einer Gruppe von Ventilöffnungen zumindest teilweise freigegeben sind. Dies kann jedoch auch bei einer Ausgestaltung erreicht werden, bei welcher, wie bei der dargestellten Variante gezeigt, die Anzahl an Ventilöffnungen in einer jeweiligen Gruppe von Ventilöffnungen der Anzahl an Durchtrittsöffnungen in dem dieser Gruppe zugeordneten Ventilschieber entspricht. Hier muss lediglich auf eine entsprechende Beabstandung bzw. Positionierung der Durchtrittsöffnungen im jeweiligen Ventilschieber geachtet werden. Weiterhin ist es auch denkbar, bei zumindest einer der Gruppen von Ventilöffnungen diese nicht in der Verschieberichtung nebeneinander und aufeinander folgend zu positionieren, sonder quer zur Verschieberichtung. Der zugeordnete Ventilschieber weist dann ebenfalls quer zur Verschieberichtung im gleichen Abstand, den auch die Ventilöffnungen aufweisen, die Durchtrittsöffnungen auf, die jedoch in der Verschieberichtung dann einen Versatz aufweisen. Je nach Verschiebestellung ist dann wiederum eine der Ventilöffnungen mit einer zugeordneten Durchtrittsöffnung ausgerichtet, während eine andere oder die anderen Ventilöffnungen, durch den Ventilschieber abgesperrt sind. Weiterhin ist es selbstverständlich, dass nicht notwendigerweise beide Ventilschieber in der gleichen Verschieberichtung verschiebbar sein müssen. Die Verschieberichtungen können bei entsprechender Ausgestaltung des Ventilkörpers beispielsweise auch senkrecht aufeinander stehen, so dass auch die Ventilschieber dann zueinander um 90° gedreht sind, gleichwohl aber noch mit den darin vorgesehenen Aussparungen so positioniert sind, dass ständig eine Verbindung zwischen diesen Volumina geschaffen ist.

Weiterhin ist es möglich, zumindest in Zuordnung zu einer der Gruppen von Ventilöffnungen den Ventilschieber so zu gestalten, dass dieser auch in eine Stellung gebracht werden kann, in welcher keine der Ventilöffnungen freigegeben ist bzw. bei entsprechender Positionierung bzw. Auswahl der Anzahl an Durchtrittsöffnungen der Ventilschieber so positioniert werden kann, dass zwei oder mehrere der Ventilöffnungen einer Gruppe von Ventilöffnungen in Verbindung miteinander gebracht werden können. Hierzu kann es erforderlich oder vorteilhaft sein, die Anzahl an Durchtrittsöffnungen in einem derartigen Ventilschieber größer zu wählen, als die Anzahl an Ventilöffnungen der zugeordneten Gruppe von Ventilöffnungen.

## Patentansprüche

1. Mehrwegeventil, insbesondere für ein Fahrzeug-Heiz/Kühl-System, umfassend in einem Ventilkörper (12) eine Ventilkammer (30) und wenigstens zwei Gruppen (32, 34) von Ventilöffnungen mit jeweils einer Mehrzahl von Ventilöffnungen (22, 24, 26, 28) zu der Ventilkammer (30), **dadurch gekennzeichnet, dass** jeder Gruppe (32, 34) von Ventilöffnungen ein in einer Verschieberichtung (V) verschiebbarer Ventilschieber (36, 38) zugeordnet ist zum Absperren und Freigeben ihrer Ventilöffnungen (22, 24, 26, 28), wobei jeder Ventilschieber (36, 38) wenigstens eine Durchtrittsöffnung (56, 58, 60, 62) aufweist, die durch Verschieben des Ventilschiebers (36, 38) in der Verschieberichtung (V) bezüglich wenigstens einer Ventilöffnung (22, 24, 26, 28) der zugeordneten Gruppen (32, 34) von Ventilöffnungen in eine Durchtrittsstellung bringbar ist, in welcher eine Durchtrittsverbindung zwischen dieser Ventilöffnung (22, 24, 26, 28) und der Ventilkammer (30) hergestellt ist, und in eine Absperrstellung bringbar ist, in welcher keine Durchtrittsverbindung zwischen dieser Ventilöffnung (22, 24, 26, 28) und der Ventilkammer (30) hergestellt ist.

2. Mehrwegeventil nach Anspruch 1,
**dadurch gekennzeichnet, dass** dann, wenn ein Ventilschieber (36, 38) mit einer Durchtrittsöffnung (56, 58, 60, 62) bezüglich einer Ventilöffnung (22, 24, 26, 28) der ihm zugeordneten Gruppe (32, 34) von Ventilöffnungen in der Durchtrittsstellung ist, alle anderen Ventilöffnungen (22, 24, 26, 28) dieser Gruppe (32, 34) von Ventilöffnungen durch diesen Ventilschieber (36, 38) abgesperrt sind.

3. Mehrwegeventil nach Anspruch 1 oder 2,
**dadurch gekennzeichnet, dass** jeder Ventilschieber (36, 38) eine der Anzahl an Ventilöffnungen (22, 24, 26, 28) der ihm zugeordneten Gruppe (32, 34) von Ventilöffnungen entsprechende Anzahl an Durchtrittsöffnungen (56, 58, 60, 62) aufweist.

4. Mehrwegeventil nach einem der Ansprüche 1 bis 3,
**dadurch gekennzeichnet, dass** bei wenigstens einer Gruppe (32, 34) von Ventilöffnungen die Ventilöffnungen (22, 24, 26, 28) in der Verschieberichtung (V) des zugeordneten Ventilschiebers (36, 38) nebeneinander liegend aufeinander folgen.

5. Mehrwegeventil nach Anspruch 3 und Anspruch 4,
**dadurch gekennzeichnet, dass** die in einem Ventilschieber (36, 38) vorgesehenen Durchtrittsöffnungen (56, 58, 60, 62) in der Verschieberichtung (V) dieses Ventilschiebers (36, 38) aufeinander folgen.

6. Mehrwegeventil nach Anspruch 5,
**dadurch gekennzeichnet, dass** der gegenseitige Abstand der Durchtrittsöffnungen (56, 58, 60, 62) in einem Ventilschieber (36, 38) sich von dem gegenseitigen Abstand der Ventilöffnungen (22, 24, 26, 28) der diesem Ventilschieber (36, 38) zugeordneten Gruppe (32, 34)von Ventilöffnungen unterscheidet.

7. Mehrwegeventil nach einem der Ansprüche 1 bis 6,
**dadurch gekennzeichnet, dass** zwei Gruppen (32, 34) von Ventilöffnungen (22, 24, 26, 28) in dem Ventilkörper (12) einander gegenüber liegend vorgesehen sind.

8. Mehrwegeventil nach Anspruch 7,
**dadurch gekennzeichnet, dass** jeder Ventilöffnung (22, 24, 26, 28) einer der Gruppen (32, 34) von Ventilöffnungen eine Ventilöffnung (22, 24, 26, 28) der anderen Gruppe (32, 34) von Ventilöffnungen im Wesentlichen gegenüber liegt.

9. Mehrwegeventil nach Anspruch 7 oder 8,
**dadurch gekennzeichnet, dass** die den beiden Gruppen (32, 34) von Ventilöffnungen zugeordneten Ventilschieber (36, 38) nebeneinander liegen und in der gleichen Verschieberichtung (V) verschiebbar sind.

10. Mehrwegeventil nach einem der Ansprüche 1 bis 9,
**dadurch gekennzeichnet, dass** jedem Ventilschieber (36, 38) ein Ventilschieberantrieb (40, 42) zugeordnet ist zur Verschiebung in seiner Verschieberichtung (V) unabhängig von der Verschiebung anderer Ventilschieber (36, 38).

11. Fahrzeug-Heiz/Kühl-System, umfassend ein Mehrwegeventil (10) nach einem der vorangehenden Ansprüche, wobei die Ventilöffnungen (26, 28) einer ersten Gruppe (32) von Ventilöffnungen mit einer ersten Verbindungsleitung (82) und einer zweiten Verbindungsleitung (84) in Verbindung stehen, welche an einen Kühlmittelmantel (76) eines Antriebsaggregats (66) angeschlossen sind, und wobei die Ventilöffnungen (26, 28) einer zweiten Gruppe (34) von Ventilöffnungen mit einer dritten Verbindungsleitung (86) und einer vierten Verbindungsleitung (88) in Verbindung stehen, welche an einen Heizungswärmetauscher (72) angeschlossen sind, wobei ferner eine fünfte Verbindungsleitung (90) von der ersten Verbindungsleitung (82) oder der zweiten Verbindungsleitung (84) abzweigt und eine sechste Verbindungsleitung (92) von der dritten Verbindungsleitung (86) oder der vierten Verbindungsleitung (88) abzweigt, wobei die fünfte Verbindungsleitung (90) und die sechste Verbindungsleitung (92) an ein vorzugsweise brennstoffbetriebenes Fahrzeugheizgerät (94) angeschlossen sind.

## Claims

1. A manifold valve, in particular for a vehicle heating/cooling system, comprising a valve chamber (30) in a valve body (12) and at least two groups (32, 34) of valve openings, each with a plurality of valve openings (22, 24, 26, 28) towards the valve chamber (30), **characterized in** a valve slide (36, 38) moveable in a sliding direction (V) being associated to each group (32, 34) of valve openings for closing and releasing its valve openings (22, 24, 26, 28), each valve slide (36, 38) comprising at least one passage opening (56, 58, 60, 62) which is moveable into a passage position in relation to at least one valve opening (22, 24, 26, 28) of said associated groups (32, 34) of valve openings by moving said valve slide (36, 38) in said sliding direction (V), wherein a passage connection between said valve opening (22, 24, 26, 28) and said valve chamber (30) is established, and which is moveable into a blocking position, where no passage connection is established between said valve opening (22, 24, 26, 28) and said valve chamber (30).

2. A manifold valve according to claim 1,
**characterized in that**, when a valve slide (36, 38) with a passage opening (56, 58, 60, 62) is in a passage position in relation to a valve opening (22, 24, 26, 28) of said associated group (32, 34) of valve openings, all other valve openings (22, 24, 26, 28) of said group (32, 34) of valve openings are blocked by said valve slide (36, 38).

3. A manifold valve according to claim 1 or 2,
**characterized in** each valve slide (36, 38) comprising a number of passage openings (56, 58, 60, 62) corresponding to the number of valve openings (22, 24, 26, 28) of said associated group (32, 34) of valve openings.

4. A manifold valve according to one of claims 1 to 3,
**characterized in that**, in at least one group (32, 34) of valve openings, said valve openings (22, 24, 26, 28) succeed each other adjacently in said sliding direction (V) of said valve slide (36, 38).

5. A manifold valve according to claim 3 and claim 4,
**characterized in** said passage openings (56, 58, 60, 62) provided in a valve slide (36, 38) succeeding each other in said sliding direction (V) of said valve slide (36, 38).

6. A manifold valve according to claim 5,
**characterized in that** the mutual distance of said passage openings (56, 58, 60, 62) in a valve slide (36, 38) differs from the mutual distance of said valve openings (22, 24, 26, 28) of said group (32, 34) of valve openings associated to said valve slide (36, 38).

7. A manifold valve according to one of claims 1 to 6,
**characterized in that**, two groups (32, 34) of valve openings (22, 24, 26, 28) are provided opposite to each other in said valve body (12).

8. A manifold valve according to claim 7,
**characterized in that** substantially opposite to each valve opening (22, 24, 26, 28) of one of the groups (32, 34) of valve openings a valve opening (22, 24, 26, 28) of the other group (32, 34) of valve openings is provided.

9. A manifold valve according to claim 7 or 8,
**characterized in** said valve slides (36, 38) associated to both groups (32, 34) of valve openings lying next to each other and being moveable in the same sliding direction (V).

10. A manifold valve according to one of claims 1 to 9,
**characterized in** a valve slide drive (40, 42) being associated to each valve slide (36, 38) for movement in said sliding direction (V) independently of the movement of other valve slides (36, 38).

11. A vehicle heating/cooling system, comprising a manifold valve (10) according to one of the preceding claims, wherein said valve openings (26, 28) of a first group (32) of valve openings communicate with a first interconnection circuit (82) and a second interconnection circuit (84), the latter being connected to a coolant casing (76) of a drive assembly (66), and wherein said valve openings (26, 28) of a second group (34) of valve openings communicate with a third interconnection circuit (86) and a fourth interconnection circuit (88), the latter being connected to a heat exchanger of a heater (72), a fifth interconnection circuit (90) diverging from said first interconnection circuit (82) or said second interconnection circuit (84) and a sixth interconnection circuit (92) diverging from said third interconnection circuit (86) or said fourth interconnection circuit (88), said fifth interconnection circuit (90) and said sixth interconnection circuit (92) being connected to a preferably fuel operated vehicle heating device (94).

## Revendications

1. Une vanne multidirectionnelle, en particulier pour un système de chauffage/refroidissement d'un véhicule, comprenant dans un corps de vanne (12) une chambre de vanne (30) et au moins deux groupes (32, 34) d'ouvertures de vanne avec chacun une pluralité d'ouvertures de vanne (22, 24, 26, 28) envers la chambre de vanne (30), **caractérisée par** une guillotine de vanne (36, 38) déplaceable dans une direction de déplacement (V) étant associée à chaque groupe (32, 34) d'ouvertures de vanne pour bloquer et débloquer lesdites ouvertures de vanne (22, 24, 26, 28), chaque guillotine de vanne (36, 38) comprenant au moins une ouverture de passage (56, 58, 60, 62) qui peut, en déplacant la guillotine de vanne (36, 38) dans la direction de déplacement (V), être amenée dans une position de passage en relation à au moins une ouverture de vanne (22, 24, 26, 28) des groupes (32, 34) de vannes associés, où une connexion de passage est établie entre ladite ouverture de vanne (22, 24, 26, 28) et la chambre de vanne (30), et qui peut être amenée dans une position de bloquage où il n'a a pas de connexion de passage entre ladite ouverture de vanne (22, 24, 26, 28) et la chambre de vanne (30).

2. Une vanne multidirectionnelle selon la revendication 1,
**caractérisée en ce que**, lorsqu'une guillotine de vanne (36, 38) avec une ouverture de passage (56, 58, 60, 62) relative à une ouverture de vanne (22, 24, 26, 28) du groupe (32, 34) de vannes associée se trouve dans la position de passage, toutes les autres ouvertures de vanne (22, 24, 26, 28) de ce groupe (32, 34) de vannes sont bloquées par ladite guillotine de vanne (36, 38).

3. Une vanne multidirectionnelle selon la revendication 1 ou 2,
**caractérisée en ce que** chaque guillotine de vanne (36, 38) comprend un nombre d'ouvertures de passage (56, 58, 60, 62) correspondant au nombre d'ouvertures de vanne (22, 24, 26, 28) du groupe associé (32, 34) d'ouvertures de vanne.

4. Une vanne multidirectionnelle selon une des revendications 1 à 3,
**caractérisée en ce qu'**au moins dans un groupe (32, 34) d'ouvertures de vanne les ouvertures de vanne (22, 24, 26, 28) se succèdent d'une manière adjacente dans la direction de déplacement (V) de la guillotine de vanne (36, 38) associée.

5. Une vanne multidirectionnelle selon la revendication 3 et la revendication 4,
**caractérisée en ce que** les ouvertures de passage (56, 58, 60, 62) prévues dans une guillotine de vanne (36, 38) se succèdent dans la direction de déplacement (V) de cette guillotine de vanne (36, 38).

6. Une vanne multidirectionnelle selon la revendication 5,
**caractérisée en ce que**, la distance mutuelle des ouvertures de passage (56, 58, 60, 62) dans une guillotine de vanne (36, 38) diffère de la distance mutuelle des ouvertures de vanne (22, 24, 26, 28) du groupe (32, 34) d'ouvertures de vanne associé à cette guillotine de vanne (36, 38).

7. Une vanne multidirectionnelle selon une des revendications 1 à 6,
**caractérisée en ce que** deux groupes (32, 34) d'ouvertures de vanne (22, 24, 26, 28) sont prévus à l'opposé dans le corps de vanne (12).

8. Une vanne multidirectionnelle selon la revendication 7,
**caractérisée en ce que** substantiellement à l'opposé de chaque ouverture de vanne (22, 24, 26, 28) d'un des groupes (32, 34) d'ouvertures de vanne une ouverture de vanne (22, 24, 26, 28) de l'autre groupe (32, 34) d'ouvertures de vanne est prévue.

9. Une vanne multidirectionnelle selon la revendication 7 ou 8,
**caractérisée en ce que** les guillotines de vanne (36, 38) associées aux deux groupes (32, 34) de vanne sont adjacents et peuvent être déplacés dans la même direction de déplacement (V).

10. Une vanne multidirectionnelle selon une des revendications 1 à 9,
**caractérisée par** un actionnement de guillotine de vanne (40, 42) étant associé à chaque guillotines de vanne (36, 38) pour un déplacement dans sa direction de déplacement (V) indépendamment du déplacement d'autres guillotines de vanne (36, 38).

11. Système de chauffage/refroidissement, comprenant une vanne multidirectionnelle (10) selon une des revendications précédentes, les ouvertures de vanne (26, 28) d'un premier groupe (32) d'ouvertures de vanne communiquant avec un premier circuit de connexion (82) et un deuxième circuit de connexion (84), connectés à une gaine de réfrigérant (76) d'un agrégat moteur (66), et les ouvertures de vanne (26, 28) d'un deuxième groupe (34) d'ouvertures de vanne communiquant avec un troisième circuit de connexion (86) et un quatrième circuit de connexion (88), connectés à un échangeur thermique de chauffage (72), un cinquième circuit de connexion (90) bifurquant en outre du premier circuit de connexion (82) ou du deuxième circuit de connexion (84) et un sixième circuit de connexion (92) bifurquant du troisième circuit de connexion (86) ou du quatrième circuit de connexion (88), le cinquième circuit de connexion (90) et le sixième circuit de connexion (92) étant branchés su un dispositif de chauffage d'un véhicule (94), de préférence opéré au combustible.
